# EUROPEAN PATENT APPLICATION

(11) **EP 2 871 850 A1**
(43) Date of publication of application: **13.05.2015**
(21) Application number: 14188141.7
(22) Date of filing: 08.10.2014
(51) Int. Cl.: H04N 21/422, H04N 21/431, H04N 21/482, G06F 3/048, H04N 21/434, H04N 21/485

(54) **Display apparatus with divided screens and method of controlling a display apparatus with divided screens**

(30) Priority: 11.11.2013 KR 20130136340
(71) Applicant: Samsung Electronics Co., Ltd, Gyeonggi-do 443-742 (KR)
(72) Inventor: Kim, Bong-su, Gyeonggi-do (KR)
(74) Representative: Appleyard Lees

(57) **Abstract**

A display apparatus is provided. The display apparatus includes a communicator configured to perform communication with the remote controller with a touch panel, a display configured to include a plurality of divided screens, and a controller configured to control a screen which corresponds to a divided area where the user command is input from among the plurality of divided screens according to the received signal in response to a signal which corresponds to a user command being input through the touch panel including a plurality of divided areas to correspond to each of the plurality of divided screens being received from the remote controller. Thus, user convenience can be improved.

## Description

### CROSS-REFERENCE TO RELATED APPLICATIONS

This application claims priority from Korean Patent Application No. 10-2013-0136340, filed in the Korean Intellectual Property Office on November 11, 2013, the disclosure of which is incorporated herein by reference, in its entirety.

### BACKGROUND

### 1. Technical Field

Methods and apparatuses according to the exemplary embodiments relate to a display apparatus and a control method thereof. More particularly, the exemplary embodiments relate to a display apparatus which receives a control signal by a remote controller and a method of controlling the display apparatus.

### 2. Description of the Related Art

With the development of electronic technology, various types of electronic apparatuses have been developed and distributed. In particular, a television is capable of providing contents with resolution which is higher than that of 3D contents and thus, contents including a plurality of images such as 3D contents, multi-angle contents, contents including a depth image etc., are provided in a broadcast technology.

Recently, a display apparatus is capable of providing contents with UHD-level image quality. In addition, as a display screen becomes bigger, the entire display screen may be divided into a plurality of screens, and various contents may be simultaneously provided to each of the divided screens. In this case, a user may use a remote controller to control a plurality of divided screens of the display apparatus.

In order to control a multi-screen display apparatus using a remote controller, a user may use a touch panel provided on the remote controller. Just as a user specifies a coordinates on the screen of a PC with an operating system using a mouse, the user may specify the screen coordinates of a display apparatus using a touch panel provided on the remote controller. A user may move from one divided screen to another by using a menu item provided on the remote controller. In addition, a user may move from one divided screen to another by using a remote controller which may perform motion recognition.

However, even with the above technology, inconvenience occurs with moving from one divided screen to another, and there is also a problem with simultaneously controlling a plurality of divided screens.

### SUMMARY

An aspect of the exemplary embodiments relates to a method of simultaneously controlling a plurality of divided display screens of a display apparatus using a remote controller and a display apparatus thereof.

A remote controller which controls a display apparatus according to an exemplary embodiment includes a touch panel configured to be capable of performing a touch input, a communicator configured to communicate with a display apparatus which includes a plurality of divided screens, and a controller configured to divide the touch panel into a plurality of areas to correspond to each of divided screens of the display apparatus according to a predetermined event, and the controller, in response to a user command being input through at least one area from among the plurality of divided screens, controls to transmit a signal to control a divided screen which corresponds to the at least one area from among the plurality of divided screens to the display apparatus according to the user command.

The predetermined event may be at least one of an event to divide a screen of the display apparatus into a plurality of divided screens and an event to press a predetermined button of the remote controller.

The remote controller may further include a storage configured to store information regarding a number and a location of a plurality of divided screens of the display apparatus, and the controller may be configured to determine at least one divided screen of the display apparatus which corresponds to at least one area from among the plurality of divided areas where the user command is input based on information stored in the storage, and control to transmit a signal to control the determined divided screen to the display apparatus.

The controller may be configured to divide the touch panel into a plurality of areas to correspond to a number and location of a plurality of divided screens of the display apparatus.

The controller may be configured to provide guidelines for distinguishing the plurality of areas on the touch panel.

A display apparatus which communicates with a remote controller with a touch panel according to an exemplary embodiment includes a display configured to include a plurality of divided screens, a communicator configured to perform communication with the remote controller, and a controller configured to control a screen which corresponds to a divided area where the user command is input from among the plurality of divided screens according to the received signal in response to a signal which corresponds to a user command input through the touch panel including a plurality of divided areas to correspond to each of the plurality of divided screens being received from the remote controller.

The controller may be configured to control each of the divided screens which correspond to the at least more than two areas individually from among the plurality of divided screens according to the received signal in response to a signal corresponding to a user command being input with respect to at least more than two areas simultaneously from among a plurality of divided areas which correspond to the plurality of divided screens being received.

The apparatus may further include an audio output and a plurality of audio decoders, and the controller, may control the plurality of audio decoders to perform decoding with respect to sound of a corresponding divided screen from among the plurality of divided screens, and control the audio output to mix and output each decoded sound in response to a signal which corresponds to a voice control command being input with respect to at least more than two areas simultaneously from among a plurality of divided areas which correspond to the plurality of divided screens being received.

A method of controlling a remote controller which controls a display apparatus including a plurality of divided screens according to an exemplary embodiment includes dividing a touch panel of the remote controller into a plurality of areas to correspond to each of divided areas of the display apparatus according to a predetermined event, and in response to a user command being input through at least one area from among the plurality of divided areas is input, transmitting a signal to control a divided screen corresponding to the at least one area from among the plurality of divided screens to the display apparatus, according to the input user command.

The predetermined event may be at least one of an event to divide a screen of the display apparatus into a plurality of divided screens and an event to press a predetermined button of the remote controller.

The transmitting may include determining at least one divided screen of the display apparatus which corresponds to at least one area from among the plurality of divided areas where the user command is input based on pre-stored information regarding a number and a location of a plurality of divided screens of the display apparatus, and transmitting a signal to control the determined divided screen to the display apparatus.

The dividing may include dividing the touch panel into a plurality of areas to correspond to a number and location of a plurality of divided screens of the display apparatus.

The method may further include providing guidelines for distinguishing the plurality of areas on the touch panel.

A method for controlling a display apparatus which performs communication with a remote controller with a touch panel according to an exemplary embodiment includes receiving a signal which corresponds to a user command which is input through the touch panel including a plurality of divided areas to correspond to each of a plurality of divided screens included in the display apparatus from the remote controller, and controlling a screen which corresponds to a divided area where the user command is input from among the plurality of divided screens, according to the received signal.

The receiving may include simultaneously receiving a signal which corresponds to a user command which is input with respect to at least more than two areas from among a plurality of divided areas which correspond to the plurality of divided screens, and the controlling may include controlling each of divided screens which correspond to the at least more than two areas individually from among the plurality of divided screens, according to the received signal.

The receiving may include receiving a signal which corresponds to a volume control command which is input with respect to at least more than two areas simultaneously from among a plurality of divided areas which correspond to the plurality of divided screens, and the controlling may include controlling a plurality of audio decoders to respectively perform decoding with respect to each sound of a corresponding divided screen from among the plurality of divided screens according to the received signal, and controlling an audio output to mix and output each decoded sound.

A display system including a display apparatus which includes a plurality of divided screens and a remote controller which controls the display apparatus according to an exemplary embodiment includes a remote controller configured to transmit a signal to control a divided screen which corresponds to the at least one area from among the plurality of divided screens to the display apparatus according to the user command in response to a touch panel being divided into a plurality of areas to correspond to each of a plurality of divided screens of the display apparatus, according to a predetermined event, and a user command is input through at least one area from among a plurality of divided areas, and a display apparatus configured to control a screen which corresponds to a divided area where the user command is input from among the plurality of divided screens according to the received signal in response to a signal to control a divided screen corresponding to the at least one area from among the plurality of divided screens being received from the remote controller.

An aspect of an exemplary embodiment may provide a remote controller which controls a display apparatus, the remote controller including: a touch panel configured to be capable of receiving a touch input; a communicator configured to communicate with a display apparatus which includes a plurality of divided screens; and a controller configured to divide the touch panel into a plurality of areas to correspond to each of divided screens of the display apparatus, wherein the controller is configured to transmit to the display apparatus a signal to control a divided screen which corresponds to at least one area from among the plurality of divided screens according to the user command.

The user command may be input through at least one area from among the plurality of divided screens.

The touch panel may be divided into a plurality of areas based on a predetermined event, wherein the predetermined event is at least one of an event to divide a screen of the display apparatus into a plurality of divided screens and an event to press a predetermined button of the remote controller.

According to the various exemplary embodiments, as a touch panel of a remote controller is divided into a plurality of areas to correspond to divided screens of a display apparatus, a user may control a plurality of divided screens simultaneously and thus, user convenience is improved.

### BRIEF DESCRIPTION OF THE DRAWINGS

The above and/or other aspects of the exemplary embodiments will be more apparent by describing certain exemplary embodiments with reference to the accompanying drawings, in which:
FIG. 1 is a block diagram of a display apparatus according to an exemplary embodiment;
FIG. 2 is a view which illustrates a display apparatus including a plurality of divided screens, according to an exemplary embodiment;
FIG. 3 is a block diagram of a remote controller according to an exemplary embodiment;
FIG. 4 is a configuration view of a remote controller according to an exemplary embodiment;
FIG. 5 is a view which illustrates a remote controller with a touch panel where guidelines are displayed according to an exemplary embodiment;
FIG. 6 is a block diagram of a display apparatus according to another exemplary embodiment;
FIG. 7 is a view which illustrates a display system according to another exemplary embodiment;
FIG. 8 is a flowchart of a method of controlling a remote controller which controls a display apparatus, including a plurality of divided screens, according to an exemplary embodiment; and
FIG. 9 is a flowchart of a method of controlling a display apparatus which performs communication with a remote controller with a touch panel according to an exemplary embodiment.

### DETAILED DESCRIPTION OF THE EXEMPLARY EMBODIMENTS

It should be observed the method steps and system components have been represented by conventional symbols in the figure, showing only specific details which are relevant for an understanding of the exemplary embodiments. Further, details may be readily apparent to person ordinarily skilled in the art may not have been disclosed. In the present disclosure, relational terms such as first and second, and the like, may be used to distinguish one entity from another entity, without necessarily implying any actual relationship or order between such entities.

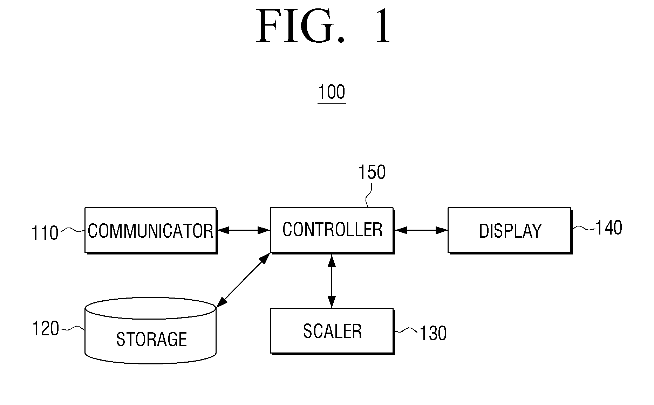

FIG. 1 is a block diagram of a display apparatus according to an exemplary embodiment.

According to FIG. 1, a display apparatus 100 may include a communicator 110, a storage 120, a scaler 130, a display 140, and a controller 150.

The display apparatus 100 provides a user with broadcasting which is received via cable or wirelessly through a display screen. In addition, the display apparatus 100 may not only provide an external input which is received from an external apparatus connected via cable or wirelessly through a display screen but also to play and provide a file stored in a storage medium mounted therein (video file, still image file, music file, etc.). Further, the display apparatus 100 may receive various video, audio, IP packet of Internet, etc., and provide the same to a user.

The display apparatus 100 is an apparatus which may receive and output a broadcast signal, and may be implemented as a digital television. However, the display apparatus 100 is not limited thereto, and may be any apparatus which can receive a broadcast signal. For example, the display apparatus 100 may be implemented as mobile phone, PMP, MP3, PC, etc. The display apparatus 100 may support 4096 pixels (4K) in width and 2048 pixels (2K) in length. The display apparatus 100 may not only be a Liquid Crystal Display (LCD) and Light Emitting Diode (LED) display apparatus but also a light-emitting apparatus such as Organic Light Emitting Diodes (OLED), Plasma Display Panel (PDP), etc.

The display apparatus 100 may divide a screen of a display 150 into a plurality of screens and provide the plurality of screens to a user. A different content may be disposed on each of the divided screens. Herein, the content may be an image, an external input, an Internet packet input via Internet, a cable image, etc., and any content of service that can be provided to a user through screen may be displayed. The display apparatus 100 may perform communication with a remote controller including a touch panel which is capable of receiving a user's touch input.

The communicator 110 may perform communication with a remote controller 200 with a touch panel which will be described later. The communicator 110 may perform communication with the remote controller 200 via Bluetooth®. The process of communication between the communicator 110 and the remote controller 200 using Bluetooth® is as follows. First of all, a Bluetooth® pairing between the communicator 110 and the remote controller 200 is performed. The Bluetooth® pairing is initially performed one time and is maintained unless there is an event, such as a communication error or replacement of the battery of the remote controller 200. The communicator 110 may perform communication with the remote controller 200 via WiFi. The method for performing communication is the same as the method using Bluetooth® and thus, further description will not be provided.

The storage 120 may be configured as DDR RAM, ROM, flash memory, CD/DVD, etc.

The storage 120 may store the number and the location of divided screens of the display 140. In addition, the storage 120 may store information regarding a divided area of a touch panel of the remote controller 200 which corresponds to a plurality of divided screens of the display 140.

The scaler 130 may generate an image by frame unit, and transmit the image to the display 140 so that the image may be displayed on each of a plurality of divided screens. The controller 150 may control the scaler 130 to generate and dispose an image frame which is displayed on a plurality of divided screens.

The display 140 displays a screen according to a screen display command of the controller 150. The display 140 may include a plurality of divided screens, and different contents may be displayed on each of the divided screens.

In response to a signal corresponding to a user command input through the touch panel 210 including a plurality of divided areas corresponding to each of the plurality of divided screens of the display 140 being received from the remote controller 200, the controller 150 may control a screen corresponding to a divided area of the touch panel 210 where a user command is input from among a plurality of divided screens, according to the received signal.

In this case, the controller 150 may receive location information of at least one divided area of the touch panel 210 of the remote controller 200 which will be described later along with a command. In addition, the controller 150 may receive a signal which corresponds to a user command to directly control at least one divided screen of the display 140 which corresponds to at least one divided area of the touch panel 210 of the remote controller 200 through the communicator 110.

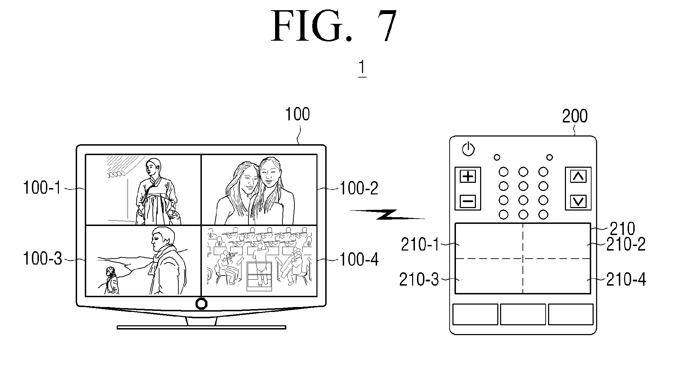

Herein, the user command may include a screen zoom-in, a screen zoom-out, and a volume control, which will be described in detail with reference to FIG. 7.

Further, in response to a signal which corresponds to user commands which are simultaneously input on at least more than two areas from among a plurality of divided areas which correspond to a plurality of divided screens being received, each of the divided screens which corresponds to the at least more than two areas from among the plurality of divided screens may be individually controlled according to the received corresponding signal, which will be described in detail with reference to FIG. 7.

The display apparatus 100 may further include an audio output 170 and an audio decoder 160. In this case, in response to a signal corresponding to a volume control command which is simultaneously input on at least more than two areas from among a plurality of divided areas which correspond to a plurality of divided screens being received, the controller 150 may control a plurality of audio decoders to perform decoding with respect to the sound of each of the corresponding divided screens from among the plurality of divided screens, and control the audio output to mix and output each of the decoded sound according to the received signal. In this case, each of the audio decoder 160 performs decoding with respect to the sound corresponding to one audio channel. The sound of a plurality of channels may be mixed and provided to a user through the audio output 170, which will be described with reference to FIG. 7.

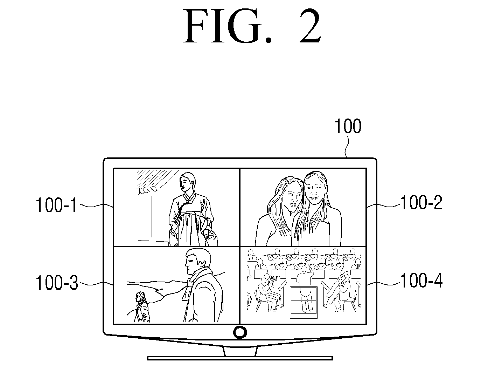

FIG. 2 is a view which illustrates a display apparatus including a plurality of divided screens, according to an exemplary embodiment.

According to FIG. 2, the display apparatus 100 may be divided into four screens, and each of the divided four screens may display different screens. The display apparatus 100 may include the display 140 which are divided into two, three, or eight screens. A plurality of divided screens 100-1, 100-2, 100-3, 100-4 may correspond to each of the divided areas of a touch panel of the remote controller 200, which will be described later.

The dividing of the display screen of the display apparatus 100 may be performed by a reserved button key of the remote controller 200. In addition, the dividing of the display screen may be performed through a menu item of the display apparatus 100 or a menu item of the remote controller 200. Further, the dividing of the display screen may be performed through voice recognition, motion recognition, etc. The method of dividing a screen may be performed in various ways other than the above described method.

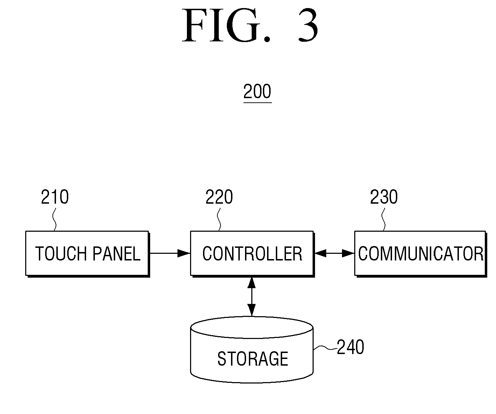

FIG. 3 is a block diagram of a remote controller according to an exemplary embodiment.

According to FIG. 3, the remote controller 200 may include the touch panel 210, a controller 220, a communicator 230, and a storage 240.

The remote controller 200 may control the operation of the display apparatus 100 via wired/wireless communication. In general, a user controls the display apparatus 100 using the remote controller 200.

The communicator 230 performs communication with the display apparatus 100 through the communicator 230. In particular, the communicator 230 may perform communication with the display apparatus 100, including a plurality of divided screens. The communicator 230 may perform communication with the display apparatus 100 using Bluetooth®. The process of performing communication between the communicator 230 and the display apparatus 100 using Bluetooth® is as below. Firstly, a Bluetooth® pairing is performed between the communicator 230 and the display apparatus 100. The Bluetooth® pairing is initially performed one time and is maintained unless there is an event, such as replacement of the battery of the remote controller 200. The communicator 230 may perform communication with the remote controller 200 via WiFi. The method of performing communication is the same as the method using Bluetooth® and thus, further description will not be provided.

The touch panel 210 is capable of performing a touch input. The touch input method of the touch panel 210 may be capacitance-type, resistive-type, etc., but this is only an example. There are no limits to the touch input method as long as it is possible to perform a touch input.

The storage 240 may consist of DDR RAM, ROM, flash memory, CD/DVD, etc. The storage 240 may store information regarding the number and location of the divided screens of the display apparatus 100. For example, the storage 240 may store the information that the number of the divided screens of the display apparatus 100 is 2, and the location of the divided screens is the left side or the right side of the screen.

The controller 220 may divide the touch panel 210 into a plurality of areas to correspond to each of the divided screens of the display apparatus 100, according to a predetermined event.

Herein, the predetermined event may be at least one of an event to divide the screen of a display apparatus into a plurality of divided screens and an event to press a predetermined button of the remote controller. For example, the predetermined event may occur by a key to divide a touch panel of the remote controller 200. In response to an event occurring as a user selects the key of the remote controller 200, the controller 220 divides the area of the touch panel 210 of the remote controller 200 to correspond to the divided screens of the display apparatus 100. Herein, it is described that the predetermined event is generated by using the key of the remote controller 200, but this is only an example. The predetermined event may occur in various ways other than the above-described method.

In addition, the controller 220 may perform a control operation to determine at least one divided screen of the display apparatus which corresponds to at least one area from among a plurality of areas where a user command is input, and transmit a signal to the display apparatus in order to control the determined divided screen.

Further, the controller 220 may receive a user command through at least one area from among the plurality of divided areas of the touch panel 210. The user command may be a command to change a screen size, a command to control sound volume, etc. However, this is only an example, and there is no limit to the command as long as the command can be identified by a user touch.

In this case, the controller 220 may transmit a signal to control a divided screen which corresponds to at least one area from among a plurality of divided screens to the display apparatus according to the input user command. The display apparatus 100 may execute a control command input from the remote controller 200 with respect to the corresponding divided screen. For example, in response to the divided screens of the display screen of the display apparatus 100 being a-1, a-2, a-3, and a-4, and the corresponding divided areas of the remote controller 200 are b-1, b-2, b-3, and b-4, and the remote controller 200 transmits a control command signal of 'touch b-1 area and enlarge the corresponding area' to the display apparatus 100, the display apparatus 100 may specify the divided screen a-1 corresponding to the b-1 area and then, enlarge the size of the corresponding screen according to the user command.

The controller 220 may transmit a control signal to the display apparatus 100 unlike the above-described exemplary embodiment. The controller 220 may control to specify at least one divided screen of the display apparatus based on at least one area from among a plurality of divided areas where a user command is input and the number and location of a plurality of divided screens of the display apparatus which is pre-stored in the storage, and transmit a signal to the display apparatus to control the divided screens. For example, in response to the divided screens of the display screen of the display apparatus 100 being a-1, a-2, a-3, and a-4, and the corresponding divided areas of the remote controller 200 being b-1, b-2, b-3, and b-4, and a user inputs a user command of 'enlarge the screen size of the b-1 area' of the remote controller 200 through the touch panel 210, the controller 220 may specify the divided screen of a-1 corresponding to the stored area of b-1. Subsequently, in response to the remote controller 200 transmitting a control command signal of 'enlarge the screen size of the divided screen of a-1' to the display apparatus 100, the display apparatus 100 may perform an operation corresponding to the user control command without any determination in order to specify a divided screen where the user command is input.

In addition, the controller 220 may divide the touch panel 210 into a plurality of areas to correspond to the number and the location of a plurality of divided screens of the display apparatus. In this case, the number and the location of the divided screens may be transmitted from the display apparatus 100 or may be pre-stored in the storage 240.

Further, the controller 220 may provide guidelines for dividing a touch panel into a plurality of areas for user convenience. A user may input an intended user command in a divided area of the touch panel 210 which is divided by guidelines.

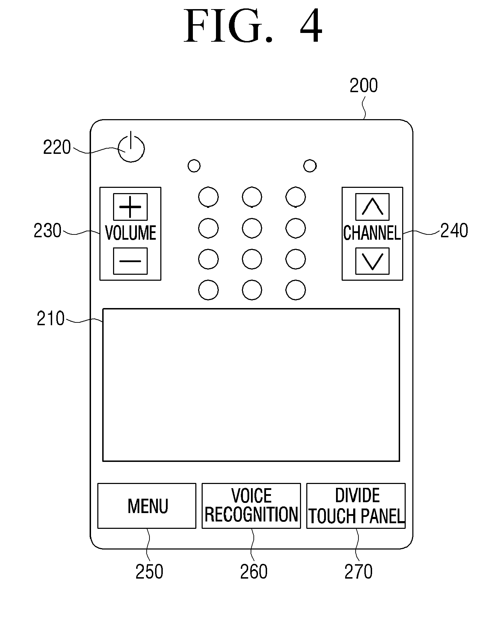

FIG. 4 is a configuration view of a remote controller according to an exemplary embodiment.

According to FIG. 4, the remote controller 200 may include a power button 220, a volume control button 230, a channel search button 240, an item selection menu 250, a voice recognition button 260, and a touch panel division button 270.

The power button 220 may turn on/off the power of the display apparatus 100. The volume control button 230 may control the volume of the display apparatus 100. The channel search button 240 may adjust the channel of the display apparatus 100 of which power is turned on. The item selection menu 250 may execute various functions of the display apparatus. A recommended channel, a preferred channel, a cable channel, etc. may be selected. In addition, the item selection menu 250 is used to select Internet for downloading/uploading a file. The general functions of the display apparatus may be selected and used through the item selection menu 250.

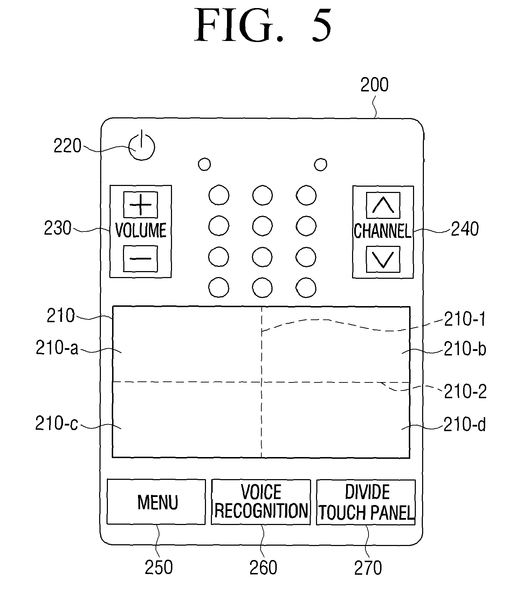

The touch 210 is capable of performing a touch input. The touch method such as capacitance-type and resistive-type may be used, and the touch panel may be touched by a pen, etc. In response to a user wishing to divide the touch panel 210 of the remote controller 200 to correspond to the divided screens of the display apparatus 200, the user may select the touch panel division key 270. The operation process of the remote controller after the user selects the touch panel division key 270 will be described with reference to FIG. 5.

FIG. 5 is a view illustrating a remote controller with a touch panel where guidelines are displayed, according to an exemplary embodiment.

According to FIG. 5, the controller 220 receives the number and the location of the divided screens of the display apparatus 100, the information stored in the storage 240 of the remote controller 220, and divides the touch panel 210 to correspond to the divided screens of the display apparatus 200. In this case, the controller 220 may display guidelines 210-1, 210-2 on the touch panel 210 so that the divided areas 210-a, 210-b, 210-c, and 210-d of the divided touch panel 210 can be clearly distinguished to a user's vision.

The number of the divided areas of the touch panel 210 may be set to be the same as the number of the divided screens of the display apparatus 100, or may be set to correspond to only some of the number of the divided screens of the display apparatus 100. There are no limits to the number of areas as long as it is possible to perform a user's touch input. In addition, the number of the divided screens of the display apparatus 100 may be two times, three times, four times, eight times, or more.

In the above exemplary embodiment, the controller 220 receives the number and the location of the divided screens of the display apparatus 100, the information stored in the storage 240 of the remote controller 200, and divides the touch panel 210 accordingly, but this is only an example. The controller 220 of the remote controller 200 may receive the number and the location of the divided screens from the display apparatus 200, and divide the touch panel 210 accordingly.

In addition, in the above exemplary embodiment with respect to FIG. 5, the guidelines 210-1, 210-2 are generated on the touch panel 210 as illustrated in FIG. 5 in response to the touch panel division button 270 being selected, but this is only an example. The guidelines 210-1, 210-2 may not be generated on the touch panel 210 visually and physically. In addition, it is described that the remote controller 200 includes the touch panel division button 270, but this is only an example. The division of touch panel may be activated in various ways. For example, the division of touch panel may be performed using a predetermined user touch pattern, a touch panel division command input from the display apparatus 100, etc.

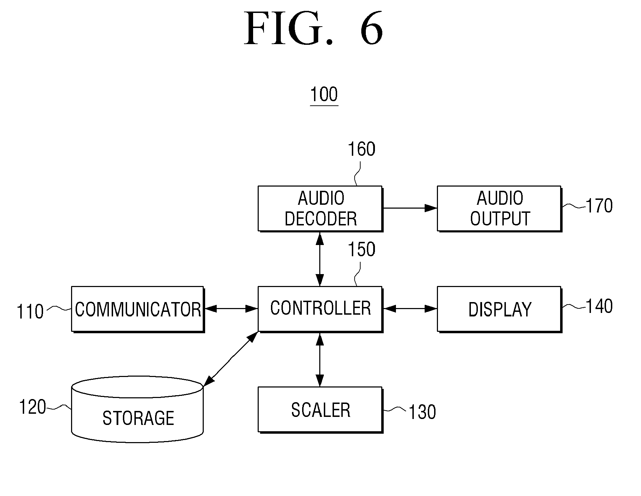

FIG. 6 is a block diagram of a display apparatus according to another exemplary embodiment. According to FIG. 6, the display apparatus 100 may further include a plurality of audio decoders 160 and the audio output 170.

The audio decoder 160 may decode sound and transmit a decoded sound signal to the audio output 170. In addition, the audio output 170 may convert a sound signal input from the decoder 160 and output the converted signal. Any general speaker may be used as the audio output 170.

In response to a signal corresponding to a sound control command which is input from at least two areas simultaneously from among a plurality of divided areas which correspond to a plurality of divided screens being received, the controller 150 controls a plurality of audio decoders to perform decoding with respect to sound of each of the divided screens from among the plurality of divided screens, according to the received signal, and control the audio output to mix and output each decoded sound.

FIG. 7 is a view which illustrates a display system according to another exemplary embodiment.

According to FIG. 7, a display system according to another exemplary embodiment may include a display apparatus which includes a plurality of divided screens and a remote controller to control the display apparatus. Each of the divided screens 100-1, 100-2, 100-3, 100-4 of the display apparatus 100 may correspond to each of the divided areas 210-1, 210-2, 210-3, 210-4 of the touch panel 210 of the remote controller 200.

Herein, in response to the touch panel being divided into a plurality of areas to correspond to each of the plurality of divided screens of the display apparatus according to a predetermined event and a user command is input through at least one of the plurality of divided areas, the remote controller may transmit a signal to control a divided screen which corresponds to the at least one of the plurality of divided areas to the display apparatus according to the user command.

In response to the signal to control a divided screen corresponding to the at least one of the plurality of divided areas being received from the remote controller, the screen corresponding to the divided area where the user command is input from among the plurality of divided screens may be controlled according to the received signal.

Herein, the operation process according to a user command through the touch panel 210 of the remote controller 200 will be described. Specifically, a user may input a user command corresponding to zoom-in, zoom-out of one divided area 210-1 of the touch panel 210. As for the zoom-in, zoom-out commands, the zoom-in command may be set as two fingers are narrowed while touching the first divided area 210-1, and the zoom-out command may be set as two fingers are widened while touching the first divided area 210-1. In response to a user inputting the zoom-in n command with respect to the first divided area 210-1, the remote controller 200 may transmit a signal which corresponds to the user's zoom-in command to the display apparatus 100. The display apparatus 100 which receives the signal corresponding to the user's zoom-in command may only zoom in the screen of the first divided screen 100-1 which corresponds to the first divided area 210-1. In this case, the zoom-in function may be fixed at the border of the area 100-1 of the first divided screen. In addition, the remote controller 200 may transmit a command signal to directly control the divided screen 100-1 corresponding to the divided area 210-1, and transmit only the information that a user inputs through a user command on the divided area 210-1 to the display apparatus 100.

In addition, a user may simultaneously input a user command with respect to at least more than two divided areas from among the plurality of divided areas 210-1, 210-2, 210-3, and 210-4 of the touch panel 210. For example, a user may input a zoom-in command with respect to the first divided area 210-1 and input a zoom-out command with respect to the second divided area 210-2 simultaneously. In this case, the remote controller may transmit a signal which corresponds to the user command to the display apparatus 100. In another example, a user may input a user command to decrease the volume with respect to the first divided area, and an input user command to increase volume with respect to the second divided area. Upon receiving the corresponding command, the display apparatus 100 may control a plurality of audio decoders to perform decoding with respect to each sound of the corresponding divided screens, from among a plurality of divided screens according to the input signal, and control the audio output to mix and output each of the decoded sound. However, a user command is not limited thereto, and a user command may be related to any function to limit the display apparatus 100 consisting of divided screens.

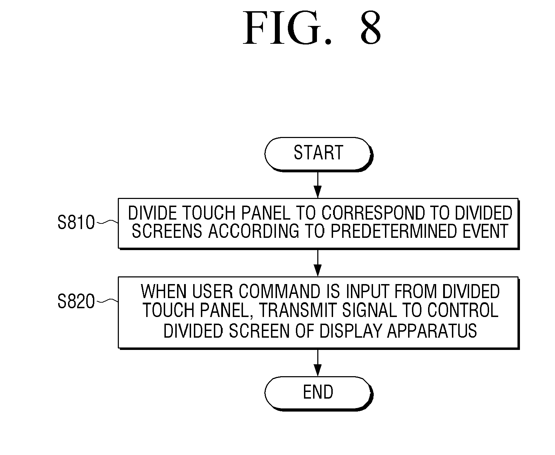

FIG. 8 is a flowchart of a method of controlling a remote controller which controls a display apparatus including a plurality of divided screens according to an exemplary embodiment.

According to FIG. 8, a method of controlling a display apparatus remotely is as below.

First of all, a touch panel of the remote controller is divided into a plurality of areas to correspond to each of the divided screens of the display apparatus according to a predetermined event (S810).

Subsequently, in response to a user command being input through at least one area of the plurality of divided areas, a signal to control a divided screen which corresponds to the at least one area of the plurality of divided areas is transmitted to the display apparatus (S820).

Herein, the predetermined event may be at least one of an event to divide the screen of the display apparatus into a plurality of divided screens and an event to press a predetermined button of the remote controller. However, this is only an example, and an area of the touch panel may be divided in various ways.

In addition, the method of controlling a display apparatus according to an exemplary embodiment includes a controlling step where at least one area where a user command is input and at least one divided screen of the display apparatus corresponding to the area are specified based on at least one area from among a plurality of divided areas where the user command is input and the pre-stored number and location of divided screens of the display apparatus, and a signal to control the specified divided screen is transmitted to the display apparatus.

Further, the transmitting step (S820) may include determining at least one divided screen of the display apparatus which corresponds to at least one area from among the plurality of divided areas where the user command is input, and transmitting to the display apparatus a signal to control the determined divided screen.

In addition, the dividing step (S820) may include determining at least one divided screen of the display apparatus which corresponds to at least one area from among the plurality of divided areas where the user command is input based on pre-stored information regarding the number and the location of the plurality of divided screens of the display apparatus, and transmitting a signal to control the determined divided screen to the display apparatus.

Further, the dividing step (S810) may include dividing the touch panel into a plurality of areas to correspond to the number and location of the plurality of divided screens of the display apparatus.

The method of controlling a remote controller which controls a display apparatus including a plurality of divided screens according to an exemplary embodiment may further include providing guidelines for distinguishing the plurality of areas on the touch panel. A user may visually recognize that the touch panel is divided through the guidelines.

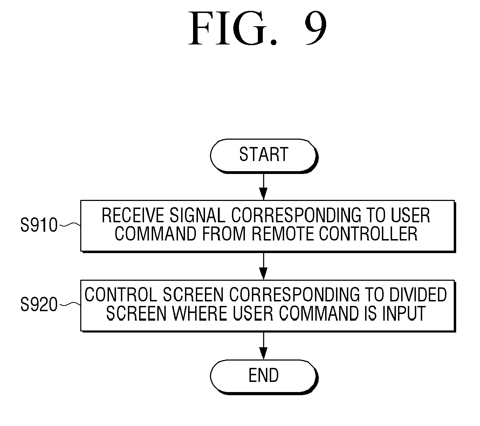

FIG. 9 is a flowchart of a method of controlling a display apparatus which performs communication with a remote controller with a touch panel according to an exemplary embodiment.

According to FIG. 9, a signal which corresponds to a user command which is input through a touch panel which is divided into a plurality of divided areas to correspond to each of a plurality of divided screens included in the display apparatus is received from the remote controller (S910).

Subsequently, a screen which corresponds to the divided area where the user command is input from among the plurality of screens is controlled according to the received signal (S920).

Herein, the receiving step (S910) may include receiving a signal which corresponds to a user command which is simultaneously input on at least more than two areas from among the plurality of divided areas which correspond to the plurality of divided screens.

In addition, the controlling step (S920) may include controlling each of the divided screens which correspond to the at least more than two areas individually from among the plurality of divided screens according to the received signal.

Further, the receiving step (S910) may include receiving a signal which corresponds to a volume control command which is simultaneously input on at least more than two areas from among the plurality of divided areas corresponding to the plurality of divided screens.

The controlling step may also include controlling a plurality of audio decoders to perform decoding with respect to each sound of the corresponding divided screens from among the plurality of divided screens according to the received signal, and control an audio output to mix and output each of the decoded sound.

The foregoing embodiments and advantages are merely exemplary and are not to be construed as limiting. The present teachings can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A remote controller which controls a display apparatus, the remote controller comprising:
a touch panel configured to be capable of performing a touch input;
a communicator configured to communicate with a display apparatus which includes a plurality of divided screens; and
a controller configured to divide the touch panel into a plurality of areas to correspond to each of divided screens of the display apparatus, according to a predetermined event,
wherein the controller is configured to transmit a signal to control a divided screen which corresponds to the at least one area from among the plurality of divided screens to the display apparatus according to the user command in response to a user command being input through at least one area from among the plurality of divided screens.

2. The remote controller as claimed in claim 1, wherein the predetermined event is at least one of an event to divide a screen of the display apparatus into a plurality of divided screens and an event to press a predetermined button of the remote controller.

3. The remote controller as claimed in claim 1, further comprising:
a storage configured to store information regarding a number and location of a plurality of divided screens of the display apparatus,
wherein the controller is configured to determine at least one divided screen of the display apparatus which corresponds to at least one area from among the plurality of divided areas where the user command is input, based on information stored in the storage, and perform a control operation to transmit a signal to control the determined divided screen to the display apparatus.

4. The remote controller as claimed in claim 1, wherein the controller is configured to divide the touch panel into a plurality of areas to correspond to a number and location of a plurality of divided screens of the display apparatus.

5. The remote controller as claimed in claim 1, wherein the controller is configured to provide guidelines for distinguishing the plurality of areas on the touch panel.

6. A display apparatus which communicates with a remote controller including a touch panel, the display apparatus comprising:
a display configured to include a plurality of divided screens;
a communicator configured to communicate with the remote controller; and
a controller configured to control a screen which corresponds to a divided area where the user command is input from among the plurality of divided screens according to the received signal in response to a signal which corresponds to a user command being input through the touch panel which includes a plurality of divided areas to correspond to each of the plurality of divided screens being received from the remote controller.

7. The apparatus as claimed in claim 6, wherein the controller is configured to control each of divided screens which correspond to the at least more than two areas individually from among the plurality of divided screens, according to the received signal in response to a signal corresponding to a user command being input with respect to at least more than two areas simultaneously from among a plurality of divided areas corresponding to the plurality of divided screens being received.

8. The apparatus as claimed in claim 6, further comprising:
an audio output; and
a plurality of audio decoders,
wherein the controller is configured to control the plurality of audio decoders to perform decoding with respect to a sound of a corresponding divided screen from among the plurality of divided screens, and control the audio output to mix and output the each decoded sound in response to signal which corresponds to a voice control command being input with respect to at least more than two areas simultaneously from among a plurality of divided areas which correspond to the plurality of divided screens being received.

9. A method of controlling a remote controller which controls a display apparatus including a plurality of divided screens, the method comprising:
dividing a touch panel of the remote controller into a plurality of areas to correspond to each of divided areas of the display apparatus according to a predetermined event; and
transmitting a signal to control a divided screen which corresponds to the at least one area from among the plurality of divided screens to the display apparatus according to the input user command in response to a user command being input through at least one area from among the plurality of divided areas..

10. The method as claimed in claim 9, wherein the predetermined event is at least one of an event to divide a screen of the display apparatus into a plurality of divided screens and an event to press a predetermined button of the remote controller.

11. The method as claimed in claim 9, wherein the transmitting comprises:
determining at least one divided screen of the display apparatus which corresponds to at least one area from among the plurality of divided areas where the user command is input based on pre-stored information regarding a number and location of a plurality of divided screens of the display apparatus; and
transmitting a signal to the display apparatus to control the determined divided screen.

12. The method as claimed in claim 9, wherein the dividing comprises dividing the touch panel into a plurality of areas to correspond to a number and location of a plurality of divided screens of the display apparatus.

13. The method as claimed in claim 9, further comprising:
providing guidelines for distinguishing the plurality of areas on the touch panel.

14. A method of controlling a display apparatus which performs communication with a remote controller with a touch panel, the method comprising:
receiving a signal which corresponds to a user command which is input through the touch panel including a plurality of divided areas to correspond to each of a plurality of divided screens included in the display apparatus from the remote controller; and
controlling a screen which corresponds to a divided area where the user command is input from among the plurality of divided screens according to the received signal.

15. The method as claimed in claim 14, wherein the receiving comprises receiving a signal which corresponds to a user command which is simultaneously input with respect to at least more than two areas from among a plurality of divided areas which correspond to the plurality of divided screens,
wherein the controlling comprises controlling each of divided screens which corresponds to the at least more than two areas individually from among the plurality of divided screens, according to the received signal.
